# EUROPEAN PATENT SPECIFICATION

(11) **EP 0 908 641 B1**
(45) Date of publication and mention of the grant of the patent: **28.01.2004**
(21) Application number: 98119324.6
(22) Date of filing: 13.10.1998
(51) Int. Cl.: F16D 65/09

(54) **Drum brake device**
Trommelbremseinrichtung
Dispositif de frein à tambour

(30) Priority: 13.10.1997 JP 29487997
(43) Date of publication of application: 14.04.1999
(73) Proprietor: Nisshinbo Industries, Inc., Chuo-ku, Tokyo 103-0013 (JP)
(72) Inventor: Fujiwara, Yoichi, c/o Nisshinbo Industries Inc., Aichi 457-0841 (JP)
(74) Representative: Sajda, Wolf E., Dipl.-Phys.

(56) References cited:
- EP-A- 0 353 857
- FR-A- 1 497 559
- US-A- 4 467 897
- US-A- 5 275 260

## Description

The present invention relates to a drum brake device that functions as a leading-trailing type or LT type when the service brake is applied, and as a duo-servo type or DS type when the parking brake is applied. More specifically, the invention relates to a drum brake device in which the configuration effectively reduces noises which are created when just releasing the parking brake.

A drum brake device of this type has been disclosed, for example, in US patent No. 5,275,260 and Japanese patent No. 62-8652.

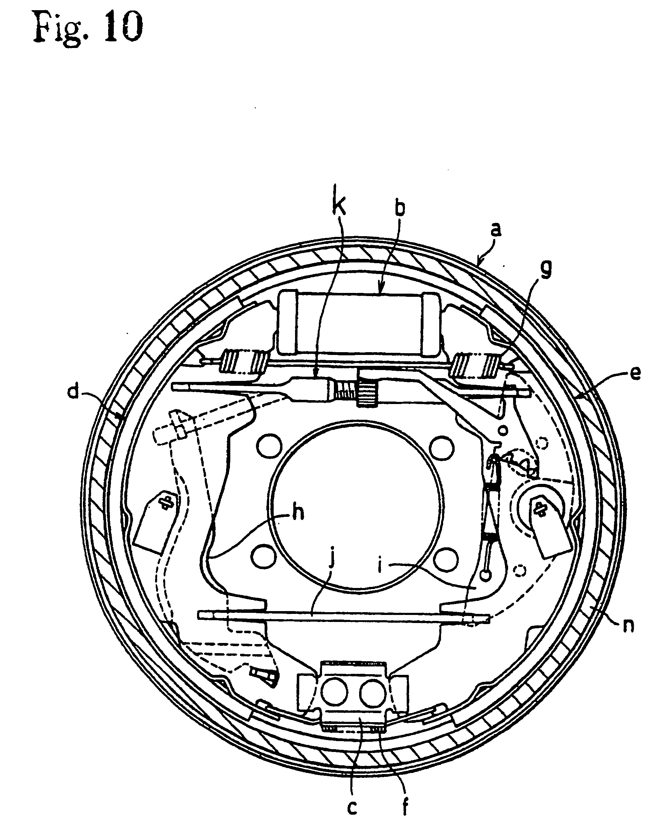

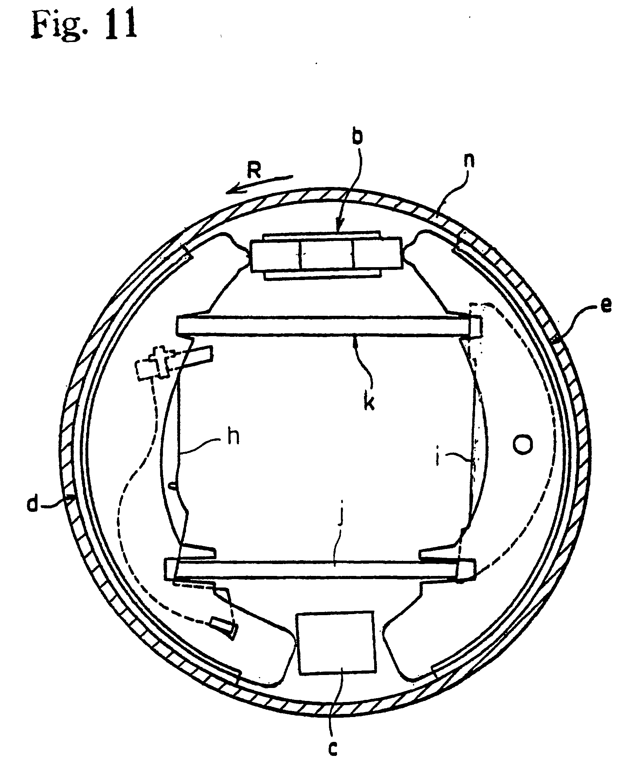

The configuration of such a drum brake device will be explained with reference to Fig. 10 and Fig. 11 of the drawings. A wheel cylinder **b** and an anchor block **c** are set on the upper and lower segments, respectively, of a back plate **a**. The upper and lower ends of a pair of left and right brake shoes **d** and **e** are functionally engaged with the wheel cylinder **b** and the anchor block **c**, respectively.

Shoe return springs **f** and **g** extend and are stretched between the upper and lower ends of the brake shoes **d** and **e**, respectively. A parking lever **h** is pivotably provided at the lower segment of the brake shoe **d** at the left side in the arrangement according to Fig. 10. A pivot lever **i** is pivotably mounted and pivoted such that its central segment can rotate on the central segment of the brake shoe **e** at the right side in the arrangement according to Fig. 10.

A rod **j** is mounted horizontally between the brake shoes **d** and **e** in the vicinity of the anchor block **c**. The left end of the rod **j** in the arrangement according to Fig. 10 is engaged with the brake shoe **d** and the parking lever **h**, whereas the right end of the rod **j** in the arrangement according to Fig. 10 is engaged with the brake shoe **e** and the lower segment of the pivot lever **i**, respectively.

On the wheel cylinder **b** side of the drum brake device, a screw-type shoe clearance adjustment device **k** is mounted horizontally between the brake shoes **d** and **e**. The left end of the shoe clearance adjustment device **k** is engaged with the brake shoe **d**, and the right end is engaged with the brake shoe **e** and the upper segment of the pivot lever **i** in the arrangement according to Fig. 10.

When the service brake is applied and the wheel cylinder **b** is operated, the drum brake device explained above functions as an LT type brake wherein both brake shoes **d** and **e** spread open with the point of abutment against the anchor block **c** as the fulcrum wherein a frictional engagement with a brake drum **n** is achieved.

When the parking brake is operated, the rotational force of the parking lever **h** is transferred to the rod **j**, the pivot lever **i**, and the shoe clearance adjustment device **k** in the given order, and the brake shoe **d** at the left side spreads open with the point of abutment with the anchor block **c** as the fulcrum and frictionally engages the brake drum **n**.

Then, the pivot lever **i** rotates with the point of abutment with the shoe clearance adjustment device **k** as the fulcrum, and thereupon the brake shoe **e** at the right side, on which the pivot lever **i** is pivotably mounted, spreads simultaneously open to frictionally engage with the brake drum **n**. Also, as shown in Fig. 11 of the drawings, the reaction force of the parking lever **h** affects on the lower end of the brake shoe **d** at the left side in Figs. 10 and 11.

In the following, reference is made to the situation shown in Fig. 11 of the drawings. If a vehicle equipped with such a drum brake device is stopped on a downhill or an uphill slope and when a rotational force is applied on the brake drum **n** in the direction of an arrow **R**, then the friction force of the brake shoe **e** on the right side in Fig. 11 is transmitted via the shoe clearance adjustment device **k** as a force trying to extend the brake shoe **d** on the left side.

On the other hand, if the force is applied in the opposite direction on the brake drum **n**, the friction force of the brake shoe **d** on the left side is transferred via the shoe clearance adjustment device **k** to the brake shoe **e** on the right side. Accordingly, when the parking brake is applied, such a drum brake device functions as brake of the DS type.

When applying the parking brake on a level road, the brake shoe **e** on the right side with the pivot lever **i** is separated from the anchor block **c**. If the parking brake is released under this condition, the brake shoe **e** on the right side hits against the anchor block **c** creating a noise which gives rise to an unsecure and uncomfortable feeling to the driver.

When the service brake is applied to stop the vehicle on a slope and is released while the vehicle is stopping, an impact noise is created because the brake shoe **e** on the right side rotates with the brake drum **n** until abutting against the anchor block **c**. This effect is due to the rotation of the drum brake **n** in the opposite direction of the arrow **R** as shown in Fig. 11 of the drawings.

Furthermore, when the parking brake only is applied while stopping the vehicle on a slope, either one of the brake shoes **d** or **e** separates from the anchor block **c.** If the parking brake is released under this condition when starting, similar impact noises are created.

EP-A-0 353 857, which is regarded to be the closest prior art, discloses a leading trailing or LT type drum brake device. This LT type drum brake device has a cylinder, an anchor block, a back plate, and a pair of brake shoes as same as a present drum brake device or DMDB). Further, it has a shock absorber between lower adjacent ends of the brake shoes and the anchor block. This shock absorber is made from laminated damping material layers and is attached to the anchor bloc **k**. If the service brake is activated while the shock absorber is being attached to the anchor block, upper adjacent ends of the brake shoes only move away from each other while maintaining the abutment between the lower ends of the brake shoes and the anchor block. The abutment because of the particular structure of LT type resulted in the reduction of specific noise, i.e., squeals, squeaks, groans, all possibly generated during the service brake operation.

Here, experimentally, the shock absorber equipp ed in the LT type drum brake device of EP-A-0 353 857 is employed and adopted in the DMDB of US Patent No. 5,275,260 and Japanese Patent No. 62-8652. Such a combination is expected to reduce the specific noise generated during the service brake operation functioning as LT type drum brake device. However the combination has no possibility of generating the specific noise during the parking brake operation functioning as DS type drum brake device because generally a brake drum is not rotating. In other words, there is no stick slip phenomena leaving no possibility of generating the specific noise. As is clearly stated in the current specification, when releasing the parking brake, an impact noise is generated in the DMDB. The type of shock absorber disclosed in EP-A-0 353 857 is made of a rubber-like damping material, which is not suitable for a solution of impact load reduction. In fact, no effective result can be expected by employing the damping material in this respect.

The document EP-A-0 353 857 discloses a drum brake device according to the preamble of claim 1. It has become apparent, however, that even though a shock absorber is used in the conventional device, the noise is not yet reduced to a satisfactory level.

Accordingly, the aim of the present invention is to resolve the problems discussed above, and hence the object underlying the present invention is to provide a drum brake device which is capable of effectively reducing impact noises between the respective brake shoes and the anchor block.

According to the present invention, this problem is solved in an advantageous and satisfying manner by a drum brake device comprising the features of claim 1. Advantageous further developments of the drum brake device according to the invention are specified in the subclaims.

In one specific embodiment of the drum brake device according to the present invention, the anchor, supporting the other ends of the brake shoes, can be formed as a rectangular plate.

According to a further aspect of the present invention, the shock absorber is detachably mounted to the anchor of the drum brake device.

According to a still further development of the drum brake device according to the present invention, the shock absorber is an approximately U-shaped device, the facing two ends of which are engaging with the anchor and holding same.

In a specific embodiment according to the present invention, the drum brake device is provided with a shock absorber which is set adjacent to the anchor and is fixedly mounted at the back plate, for example by rivets.

According to a still further aspect of the present invention, grease is applied on the impact surfaces of the anchor and the shock absorber of the drum brake device.

Further objects, features and advantages of the present invention will become readily apparent from the following description of preferred embodiments when considered in conjunction with the accompanying drawings wherein:
- Fig. 1: is a plan view of a first embodiment of a drum brake device according to the present invention;
- Fig. 2: is an explosion view of the anchor used in the drum brake device according to Fig. 1;
- Fig. 3: is a plan view of the anchor in the drum brake device according to Fig. 1 when the parking brake is in operation;
- Fig. 4: is a plan view of the anchor showing another holding structure of the shock absorber used in the drum brake device;
- Fig. 5: is an enlarged plan view of the service brake actuator used in the drum brake device;
- Fig. 6: is a cross-section view taken along the lines VI-VI in Fig. 1 showing the first embodiment;
- Fig. 7: is a plan view similar to Fig. 3 and Fig. 4 showing a second embodiment of the drum brake device according to the present invention, wherein the parking brake is in operation;
- Fig. 8: is a plan view similar to Fig. 7 and showing a third embodiment of the drum brake device according to the present invention, wherein the parking brake is in operation;
- Fig. 9: is a plan view similar to Figs. 7 and 8 showing a fourth embodiment of the drum brake device according to the present invention, wherein the parking brake is in operation;
- Fig. 10: is a plan view of a conventional drum brake device forming the starting point of the present invention; and
- Fig. 11: is a diagrammatic view of the conventional drum brake device according to Fig. 10 illustrating the operation when the parking brake is released.

### First Embodiment

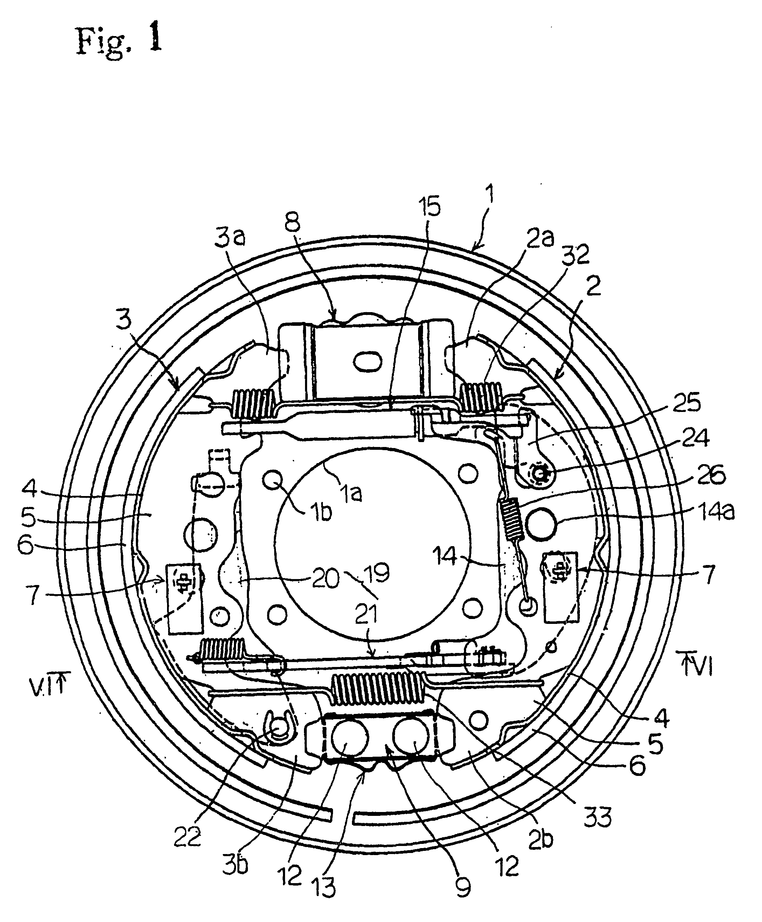

A first embodiment of the present invention will now be explained with reference to Fig. 1 to Fig. 6 of the drawings.

As shown in Fig. 1, a center hole 1a of a back plate 1 is to be fitted over the vehicle axle with a gap and is affixed to a stationary part of the vehicle by bolts through a plurality of bolt holes 1b.

A pair of brake shoes 2, 3 comprises shoe webs 5 fixed on the inner surface of curved shoe rims 4 so as to form a T-shaped section in cross-section. Linings 6 are fixed on the outer surfaces of the shoe rims 4. The linings 6 frictionally engage with a brake drum, not shown in the drawings, in order to brake the brake drum. The brake shoes are elastically mounted on the back plate 1 by shoe hold devices 7 comprising a conventional plate spring and pin.

A service brake actuator 8 is a fluid pressure type cylinder or an air pressure type cylinder, which is activated when operating the service brake. The service brake actuator 8 is provided between the adjacent ends 2a and 3a of the brake shoes 2 and 3, facing each other, and is mounted on the back plate 1 by bolts etc..

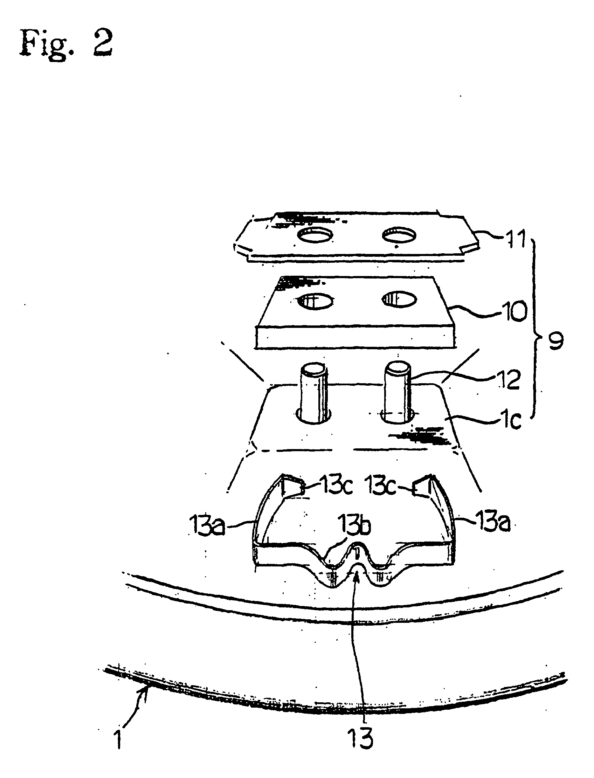

As shown in Fig. 1 and Fig. 2 of the drawings, an anchor 9 is provided with a plurality of rivets 12 inserted into a rectangular anchor plate 10 on a protuberance 1c of the back plate 1, and further comprises a guiding plate 11 which restricts a movement of the brake shoes 2 and 3 when they tend to raise from the back plate 1. The rectangular anchor plate 10 as shown in Fig. 2 of the drawings has a pair of long sides extending horizontally and a pair of short sides extending vertically in the arrangement of Fig. 2.

The rivets 12 are tempered to be fixed. The adjacent ends 2b and 3b of the lower part of the brake shoes 2 and 3 in the arrangement according to Fig. 1 are respectively supported by the anchor plate 10. The components of the anchor 9 are not specifically required to be the guiding plate 11 and the rivets 12 as shown in the drawings. The only requirement is that the rectangular anchor plate 10 respectively supports the lower adjacent ends 2b and 3b of the brake shoes 2 and 3. The anchor plate 10 may also be welded on the back plate 1.

The rectangular anchor plate 10 of the anchor 9 may be of a pin type in which an anchor pin is vertically placed. However, using a plate as the anchor plate 10 facilitates the manufacturing process by adopting a press work.

A shock absorber 13 is provided as a cushioning member inserted between the anchor plate 10 of the anchor 9 and the corresponding lower adjacent ends 2b and 3b of the brake shoes 2 and 3. As shown in Fig. 2 of the drawings, the shock absorber 13 can be formed by bending a plate spring resulting in a C-shaped or approximately U-shaped configuration adapted to grab the periphery of the anchor plate 10.

As shown in Fig. 2 of the drawings, the shock absorber 13 comprises a pair of right and left cushionings 13a which are slightly curved so that they flexibly bend. A connecting portion 13b connects the two cushionings 13a. At the ends of the cushionings 13a, hooks 13c are provided which grab and engage the long sides of the anchor plate 10, wherein the hooks 13c are facing the connecting portion 13b.

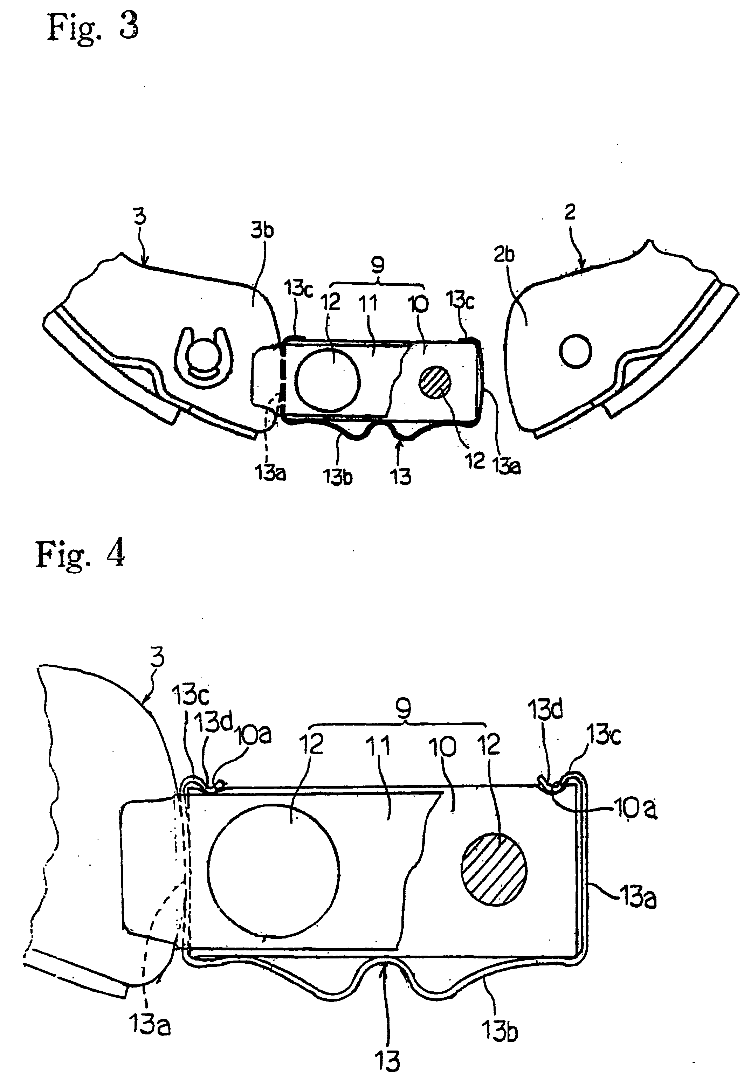

Especially, when no external force is applied on the shock absorber 13, a slight clearance is preferably formed between the side surface of the short sides of the anchor plate 10 and the side surface of the cushionings 13a, as shown at the right side in Fig. 3 of the drawings.

The clearance between the surface of the short side of the anchor plate 10 and the cushionings 13a is not limited to the example explained above. As shown in Fig. 4 of the drawings, the cushionings 13a may be flat if the respective hook 13c of the shock absorber 13 is curved toward the long side of the anchor plate 10 to form convex portions 13d. Corresponding concave portions 10a are formed in the long sides of the anchor plate 10 to be engaged by the hooks 13c.

When the shock absorber 13 is assembled on the anchor plate 10, the convex portions 13d of the shock absorber 13 are placed in the concave portions 10a of the anchor plate 10 to form a slight clearance between the surfaces of the short sides of the anchor plate 10 and the cushioning 13a.

When assembling the shock absorber 13, the hooks 13c and the cushionings 13a are stretched to be assembled from the long sides of the anchor 9 affixed on the back plate 1.

In this embodiment, the shock absorber 13 is installed from outside of the drum brake device; however, it may also be inserted from the center of the drum brake device.

A material having a high corrosion resistance, such as stainless steel, may be used to form the shock absorber 13. The hooks 13c may be bent later by placing the steel plate along the respective long side of the anchor plate 10 and then bending it.

If the parking brake is released on a level plane or on a slope, or if the parking brake is applied after the service brake has been applied to stop the vehicle on a slope, then the service brake is released while the vehicle is stopping, as shown for instance in Fig. 3 of the drawings. Then, the brake shoe 2 separated from the anchor 9 rotates by the return spring force or rotates with the brake drum (not shown in the diagram) so that the lower end 2b of the brake shoe 2 may return to contact the anchor 9.

As explained above, a conventional drum brake device without a shock absorber 13 creates a considerable impact noise.

When comparing the present invention with a conventional device, the cushioning 13a of the shock absorber 13 installed on the anchor 9 absorbs - by means of its spring force - the impact force on the lower end 2b of the brake shoe 2, which remarkably reduces the impact noise. Of course, the shock absorber 13 of the invention also reduces the impact noise between the lower end 3b of the brake shoe 3 and the anchor 9.

The drum brake device according to the invention is equipped with a pivot lever 14 in order to maintain the operation of the service brake and the parking brake when applying the service brake and parking brake at the same time.

The pivot lever 14 is provided on the shoe web 5 of the brake shoe 2. A protuberance 14a formed at the central region of the pivot lever 14 by pressing that portion is mounted and rotatably pivoted in a hole in the shoe web 5. A pin may be used as the pivot instead of the protuberance 14a and the hole as mentioned above.

Adjacent to the service brake actuator 8, a shoe clearance adjustment device 15 bridges the brake shoes 2 and 3.

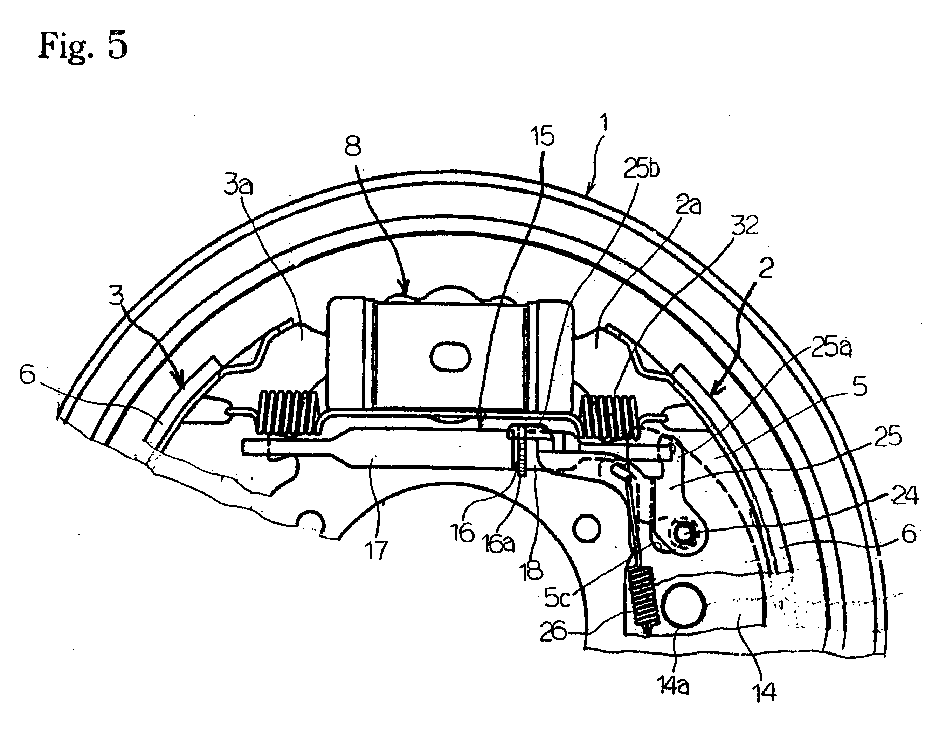

As disclosed in Fig. 5 of the drawings, the shoe clearance adjustment device 15 can be a conventional adjustment device, for example a screw-type adjustment device, for adjusting the clearance between the brake drum (not shown in the drawings) and the brake shoes 2 and 3. The shoe clearance adjustment device 15 comprises a bolt 16 with a toothed adjuster 16a, a tube 17 into which one end of the bolt 16 is screwed, and a socket 18 rotatably fitting with the other end of the bolt 16.

By inserting a device, such as a screwdriver, through a hole (not shown) formed in the back plate 1 or in the brake drum, the whole length of the shoe clearance adjustment device 15 may be manually adjusted by screwing the bolt 16 with the toothed adjuster 16a to screw the part of the bolt 16 out from or into the tube 17.

One end of each of the tube 17 described above and the socket 18 are pressed to form plate-shaped ends having a notched groove therein. The bottom of the notched groove at the left end of the tube 17 abuts against the shoe web 5 of the brake shoe 3 in a notch provided therein. The bottom of the notched groove of the right end of the socket 18 abuts against the shoe web 5 of the brake shoe 2.

A slight clearance exists between the bottom of the notched groove of the pivot lever 14 and the bottom of the notched groove of the socket 18 considering manufacturing tolerances. The pivot lever 14 is able to abut against the notched groove of the socket 18 when the pivot lever 14 rotates counterclockwise with the point of abutment with the protuberance 14a as the fulcrum.

An incremental type automatic shoe clearance adjustment device 15, activated when the service brake is in operation, is explained below with reference to Fig. 5 of the drawings. A pin 24 fixed at one side of the pivot lever 14 is vertically set to freely protrude through a slot 5c in the shoe web 5 of the one brake shoe 2. The central region of an adjustment lever 25 is rotatably supported on the pin 24 as the fulcrum.

A first arm 25a of the adjustment lever 25 abuts against a stepped surface of the socket 18, and another arm 25b engages with the toothed adjuster 16a of the bolt 16. An adjustment spring 26 extends between the other arm 25b and the shoe web 5 and provides the adjustment lever 25 with a counterclockwise spring force with the pin 24 as the fulcrum.

In the configuration described above, when both of the brake shoes 2 and 3 open with the point of the abutment on the anchor 9 as the fulcrum in a service brake operation, then the shoe clearance adjustment device 15 follows the brake shoe 3 because of the spring force applied by the adjustment spring 26. The pivot lever 14 follows the other brake shoe 2. At this time, however, the pivot lever 14 is rotated clockwise with the protuberance 14a as the fulcrum, as shown in Fig. 5 of the drawings. Accordingly, the adjustment lever 25 rotates counterclockwise to the amount that the pin 24 rotates plus the amount that the shoe clearance adjustment device 15 follows the brake shoe 3.

When the linings 6 of the brake shoes 2 and 3 are worn and the amount of rotation of the arm 25b of the adjustment lever 25 goes beyond one pitch of the teeth of the toothed adjuster 16a, then the bolt 16 is screwed to be exposed out of the tube 17 and the clearance between the brake drum (not shown) and the linings 6 is automatically adjusted to be maintained at a certain distance.

When the parking brake is in operation, the shoe clearance adjustment device 15, the pivot lever 14, the adjustment lever 25, etc. follow together to the amount of the brake shoe 3 opening, which allows no effect on the automatic adjustment operation.

As shown in Fig. 1 of the drawings, the parking brake actuator 19, activating when the parking brake is in operation, is provided adjacent to the anchor 9. The parking brake actuator 19 comprises a forward-pull type brake lever 20 and a strut 21, etc..

The brake lever 20 is mounted under the shoe web 5 of the brake shoe 3. The basal part is pivotably supported by a pin 22 at the other end 3b of the brake shoe 3. A notched groove is formed at the folded portion of the free end of the brake lever 20. A parking brake cable is hooked to that groove in a conventional manner.

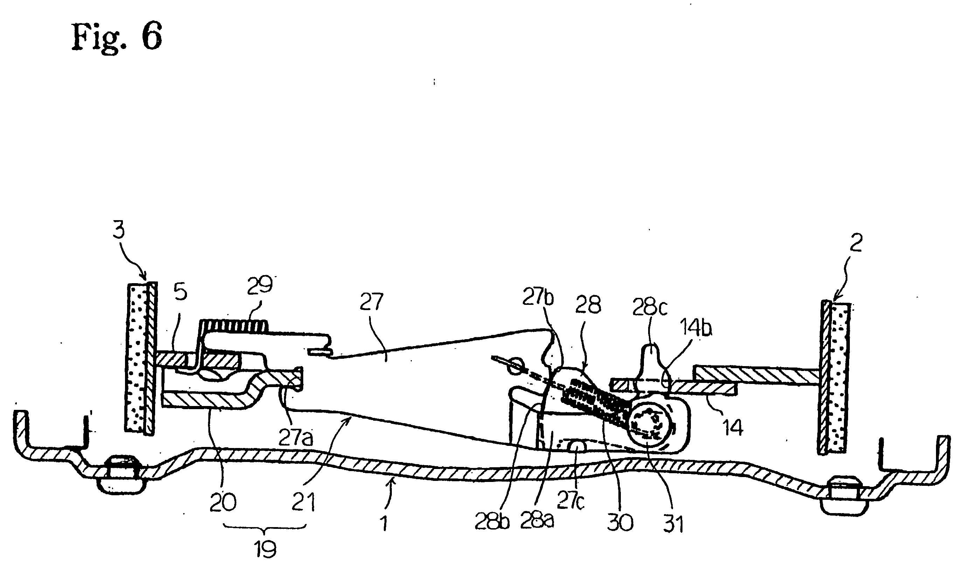

As shown in Fig. 6 of the drawings, the strut 21, having an automatic lever stroke adjustment function, comprises a plate-shaped adjustment strut 27, a bell crank lever 28, and springs 29 and 30.

The bottom of a notched groove 27a of the adjustment strut 27 abuts against the inner surface of the brake lever 20. The spring 29 stretched between the shoe web 5 of the brake shoe 3 and the adjustment strut 27 maintains the abutment of the adjustment strut 27 and the brake lever 20.

In the configuration according to Fig. 6, at the right side of the adjustment strut 27, the central portion of the bell crank lever 28 is rotatable with a pin 31 as the fulcrum and is slidable in the longitudinal direction of the adjustment strut 27. Teeth 28b formed with small pitches are provided on the outer circumference of the arm 28a and have a sector form. These teeth 28b engage teeth 27b formed with small pitches provided at the central region of the adjustment strut 27. The spring 30 stretched between the adjustment strut 27 and the pin 31 maintains the engagement between the teeth 27b and 28b. A protuberance 27c is formed on the adjustment strut 27, which regulates and limits the counterclockwise rotation of the bell crank lever 28.

An arm 28c of the bell crank lever 28 is freely inserted through a rectangular hole 14b formed at the other side of the pivot lever 14. Then, the operational force of the brake lever 20 is transferable via the strut 21.

It should be noted that the drum brake device according to the present invention does not require a lever stroke automatic adjustment device to automatically adjust the clearance between the brake lever 20 and the pivot lever 14 which increases as the lining 6 of the brake shoe 2 wears out.

As shown in Fig. 1 of the drawings, return springs 32 and 33 extend between the upper ends 2a and 3a of the brake shoes 2 and 3, and between the lower ends 2b and 3b of the brake shoes 2 and 3, which return the brake shoes 2 and 3 back to the original positions when the brake is released.

The moment of the lower return spring 33 side is set to be higher than the moment of the upper return spring 32 side so that the lower end 2b of the brake shoe 2 may not separate from the anchor 9 when the brake is not in operation, even if the brake lever 20 is set to be slightly pulled.

Setting the moment in the above way prevents any dragging of the brake shoe and at the same time certainly and effectively reduces any impact noise created when just releasing the parking brake on a level plane.

The operation of the drum brake device according to the invention is explained hereinafter.

In service brake operation, as the pressure is applied to the service brake actuator 8, both brake shoes 2 and 3 are spread open with the point of abutment with the anchor 9 as the fulcrum. The linings 6 frictionally engage with the rotating brake drum, not shown in the drawings, thereby braking the brake drum. At this time, one of the brake shoes 2 or 3 functions as a self-servo component, and the other of the brake shoes 3 or 2 does function as a non-servo component, thereby having the drum brake device functioning as an LT type brake.

During operation of the parking brake, as shown in Fig. 1, the brake lever 20 is pulled to the right by a parking brake cable, not shown in the drawings. Then, the brake lever 20 rotates clockwise with the pin 22 as the fulcrum. The rotating force of the brake lever 20 is transmitted to the strut 21, the pivot lever 14, and the shoe clearance adjustment device 15, in that order. Accordingly, the other brake shoe 3 opens with the point of abutment with the anchor 9 as the fulcrum and frictionally engages with the brake drum, not shown in the drawings.

Then, the pivot lever 14 rotates counterclockwise with the point of abutment with the shoe clearance adjustment device 15 as the fulcrum, and the operating force is transmitted to the brake shoe 2 via the protuberance 14a of the pivot lever 14. Therefore, the brake shoe 2 opens with the point of abutment with the anchor 9 as the fulcrum to frictionally engage with the brake drum. Also, the reaction force affects on the lower end of the other brake shoe 3 via the pin 22.

At this point, when the vehicle is stopping on an uphill or downhill slope, as the counterclockwise rotating force is applied to the brake drum, the frictional force of the other brake shoe 3 is transmitted to the one brake shoe 2 as an opening force via the shoe clearance adjustment device 15.

Also, when applying the clockwise rotating force, the frictional force of the one brake shoe 2 is transmitted to the other brake shoe 3 via the shoe clearance adjustment device 15. Accordingly, when the parking brake is in operation, both brake shoes 2 and 3 have self-servo effects so that the drum brake device is functioning as a DS type brake.

In the following, further embodiments of the invention will be explained in detail wherein the same reference signs are used for the same or equivalent parts and components as described above. Hence, the explanation thereof will be omitted.

### Second Embodiment

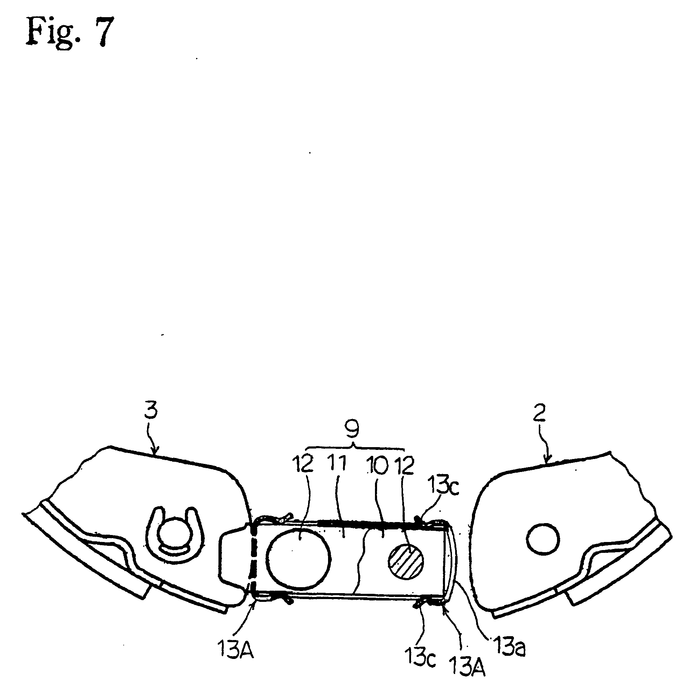

Fig. 7 of the drawings shows a second embodiment of the invention wherein individual shock absorbers 13A are flexibly provided on the short sides of the anchor plate 10, respectively.

The respective shock absorber 13A is an approximately U-shaped device in which two ends of the cushionings 13a are bent at almost a right angle to form the hooks 13c. The pair of hooks 13c facing each other grab the long sides of the anchor plate 10 by means of their inherent flexibility.

The cushionings 13a of the shock absorber 13A are preferably designed to maintain a slight clearance between the cushioning 13a and the surface of the short side of anchor plate 10 when no external force is applied. However, the clearance is not an absolutely necessary structural factor of the invention.

In this embodiment, the shock absorbers 13A are easily assembled by fitting them on the anchor plate 10 of the anchor 9. The hooks 13c open only slightly, which prevents an off setting of the cushionings 13a when inserting the shock absorbers 13A.

This embodiment of the invention is very economical in that such small pieces are easily replaced when a problem arises in use, for example when wearing out occurs to the shock absorbers 13A.

The engagement structure of the anchor plate 10 and the shock absorber 13 of Fig. 4 may of course also be employed in connection with the second embodiment.

### Third Embodiment

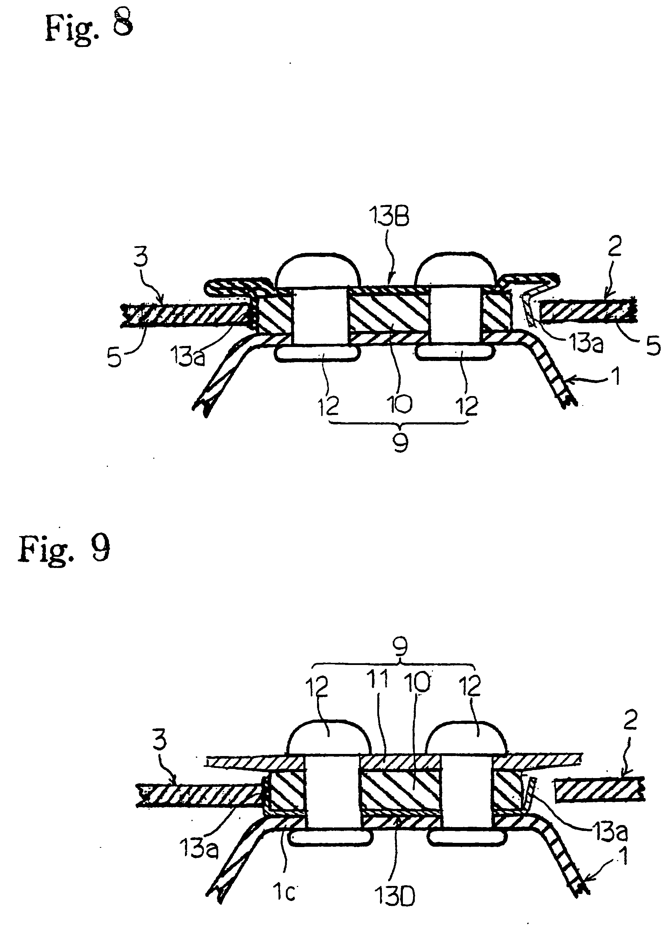

Fig. 8 illustrates a third embodiment of the invention in which a shock absorber 13B is superposed directly on the anchor plate 10 on the surface that is opposite to the back plate 1. In this case, the shock absorber 13B is fixed to the anchor plate 10 and the back plate 1 by means of rivets 12.

Two ends of the plate springs forming the shock absorber 13B in the third embodiment are folded to extend over the shoe webs 5. Also, the folded ends thereof are bent in a right angle to form the cushionings 13a, as shown in Fig. 8 of the drawings.

In this third embodiment, the folded portions of the shock absorber 13B folded over the shoe webs 5 restrict any raising of the brake shoes 2 and 3. Thus, a guiding plate 11 is not required in this third embodiment.

### Fourth Embodiment

Fig. 9 of the drawings shows a fourth embodiment of the invention comprising a shock absorber 13D arranged between the anchor plate 10 of the anchor 9 and the back plate 1. In this case, the shock absorber 13D is fixed to the back plate 1 by means of rivets 12.

Two ends of the shock absorber 13D of the fourth embodiment are bent at an obtuse, but approximately right angle to form the cushionings 13a.

In this fourth embodiment, the protuberance 1c of the back plate 1 may be lower, which facilitates drawing by pressing and lowers the expense of making the back plate 1.

Furthermore, in connection with all the embodiments disclosed above, grease may be applied between the anchor plate 10 and the respective shock absorbers 13A, 13B and 13D as in the first embodiment.

### Fifth Embodiment

The first embodiment disclosed above illustrates the drum brake device equipped with an incremental type shoe clearance adjustment device 15 which automatically adjusts the clearance between the lining 6 of the respective brake shoes 2 and 3 and the brake drum. However, the automatic adjustment device is not limited to this type. Rather, the automatic adjustment device may be a manual adjustment device without an automatic function in some cases.

### Sixth Embodiment

In the various embodiments of the drum brake device explained above a cross-pull type parking brake may be used.

### Seventh Embodiment

The first embodiment disclosed above illustrates a drum brake device in which a certain relation of the moment between the return springs 32 and 33 affecting the brake shoe 2 is set. However, the moment relation is not limited to the example described above. For the purposes of this invention, the drum brake device is only required to function as an LT type brake when the service brake is in operation, and to function as a DS type brake when the parking brake is in operation.

The various embodiments of the drum brake device according to the invention provide various effects and advantages which may be summarized as follows.

The shock absorber is provided between the anchor and the end of the brake shoe facing the anchor, which allows the creation of an indirect contact between the brake shoe and the anchor. This configuration effectively reduces impact noise and eliminates an uncomfortable and unsecure feeling of the driver.

By applying grease between the anchor and the shock absorber impact noises can be further reduced.

The shock absorber, which is detachable from the anchor, facilitates the assembly and disassembly of the shock absorber. Furthermore, the shock absorber may be set without special processing.

The indirect contact between the brake shoe and the anchor via the shock absorber helps to prevent wearing out and settling of the anchor.

Using a harder material for the shock absorber helps to prevent wearing out and settling of the parts supporting the brake shoe and restricts the sliding resistance of the brake shoe for a long time.

It is readily apparent that the drum brake device described above has the advantage of wide commercial utility. It should be understood that the specific forms of the invention described above are intended to be representative only without any restriction, since certain modifications within the scope of these teachings will be readily apparent to those skilled in the art.

## Claims

1. A drum brake device, comprising
- a back plate (1),
- two brake shoes (2, 3) set to face each other on top of the back plate (1),
- a service brake actuator (8) adapted to be activated by a service brake mounted on the back plate (1) between one pair of the first adjacent ends (2a, 3a) of the brake shoes (2, 3),
- an anchor (9) mounted on the back plate (1) between the other pair of the second adjacent ends (2b, 3b) of the brake shoes (2, 3), the anchor (9) having a contacting section, the second adjacent ends (2b, 3b) of the brake shoes (2, 3) engaging therewith,
- a shoe clearance adjustment device (15) provided adjacent to the service brake actuator (8) and arranged between the brake shoes (2, 3),
- a parking brake actuator (19) adapted to be activated by a parking brake provided adjacent to the anchor (9), and
- a pivot lever (14) rotatably pivoted at the central region of the brake shoe (2), the one side and the other side of which respectively and functionally engage the shoe clearance adjustment device (15) and the parking brake actuator (19),
- a shock absorber (13, 13A, 13B, 13D) comprising a cushioning (13a) which is placed between the anchor (9) and the other ends (2b, 3b) of the brake shoes (2, 3) facing the anchor (9),
**characterized in that** the shock absorber (13, 13A, 13B, 13D) is a plate spring mounted to the anchor (9) and leaving a slight clearance between the contacting section of the anchor (9) and the side surface of the cushioning (13a), when no external force is applied on the shock absorber (13, 13A, 13B, 13D).

2. The device according to claim 1,
**characterized in that** the anchor (9) supporting the other ends (2b, 3b) of the brake shoes (2, 3) is a rectangular plate.

3. The device according to claim 1 or 2,
**characterized in that** the shock absorber (13, 13A) is detachably mounted to the anchor (9).

4. The device according to any of claims 1 to 3,
**characterized in that** the shock absorber (13, 13A, 13B, 13D) is an approximately U-shaped device, the facing two ends of which are engaging with the anchor (9).

5. The device according to any of claims 1 to 4,
**characterized in that** grease is applied on the impact surfaces of the anchor (9) and the shock absorber (13, 13A, 13B, 13D).

6. The device according to any of claims 1 to 5,
**characterized in that** the shock absorber (13) comprises a pair of cushionings (13a) connected by a connecting portion (13b) ending in hooks (13c) which are in snap-fit engagement with the anchor (9).

7. The device according to any of claims 1 to 5,
**characterized in that** the shock absorber (13A) comprises a pair of single shock absorbers (13A) which are mounted with their cushionings (13a) on opposite sides of the anchor (9) and are in snap-fit engagement with the anchor (9) by means of their hooks (13c) provided at the respective ends.

8. The device according to any of claims 1 to 5,
**characterized in that** the shock absorber (13B) is a folded plate spring, which is fixedly mounted on the anchor (9) and comprises folded ends forming elastic cushionings (13a) provided between the anchor (9) and the brake shoes (2, 3).

9. The device according to any of claims 1 to 5, **characterized in that** the shock absorber (13D) is a folded plate spring, which is fixedly mounted on the anchor (9) and comprises ends extending at an obtuse, approximately right angle from the main part thereof to form cushionings (13a) provided at the anchor (9).

## Patentansprüche

1. Trommelbremsvorrichtung, die folgendes aufweist:
- eine Rückenplatte (1),
- zwei Bremsbacken (2, 3), die einander gegenüberliegend auf der Rückenplatte (1) angeordnet sind,
- eine Betriebsbremsen-Betätigungseinrichtung (8), die dazu ausgebildet ist, durch eine Betriebsbremse aktiviert zu werden und die zwischen dem einen Paar der ersten einander benachbarten Enden (2a, 3a) der Bremsbacken (2, 3) an der Rückenplatte (1) angebracht ist,
- einen Anker (9), der zwischen dem anderen Paar der zweiten einander benachbarten Enden (2b, 3b) der Bremsbacken (2, 3) an der Rückenplatte (1) angebracht ist, wobei der Anker (9) einen Berührungsbereich aufweist, mit dem die zweiten einander benachbarten Enden (2b, 3b) der Bremsbacken (2, 3) in Berührung treten,
- eine Backenzwischenraum-Einstellvorrichtung (15), die der Betriebsbremsen-Betätigungseinrichtung (8) benachbart vorgesehen ist sowie zwischen den Bremsbacken (2, 3) angeordnet ist,
- eine Parkbremsen-Betätigungseinrichtung (19), die dazu ausgebildet ist, durch eine Parkbremse aktiviert zu werden und die in der Nähe des Ankers (9) vorgesehen ist, und
- einen Schwenkhebel (14), der an dem zentralen Bereich der Bremsbacke (2) schwenkbar angebracht ist, wobei die eine Seite und die andere Seite des Schwenkhebels mit der Backenzwischenraum-Einstellvorrichtung (15) bzw. der Parkbremsen-Betätigungseinrichtung (19) funktionsmäßig in Eingriff stehen,
- einen Stoßdämpfer (13, 13A, 13B, 13D) mit einer Dämpfungseinrichtung (13a), die zwischen dem Anker (9) und den dem Anker (9) zugewendeten anderen Enden (2b, 3b) der Bremsbacken (2, 3) angeordnet ist,
**dadurch gekennzeichnet,**
**daß** es sich bei dem Stoßdämpfer (13, 13A, 13B, 13D) um eine Plattenfeder handelt, die an dem Anker (9) angebracht ist und einen geringen Zwischenraum zwischen dem Berührungsbereich des Ankers (9) und der Seitenfläche der Dämpfungseinrichtung (13a) freiläßt, wenn keine externe Kraft auf den Stoßdämpfer (13, 13A, 13B, 13D) aufgebracht wird.

2. Vorrichtung nach Anspruch 1,
**dadurch gekennzeichnet,**
**daß** es sich bei dem die anderen Enden (2b, 3b) der Bremsbacken (2, 3) abstützenden Anker (9) um eine rechteckige Platte handelt.

3. Vorrichtung nach Anspruch 1 oder 2,
**dadurch gekennzeichnet,**
**daß** der Stoßdämpfer (13, 13A) an dem Anker (9) lösbar angebracht ist.

4. Vorrichtung nach einem der Ansprüche 1 bis 3,
**dadurch gekennzeichnet,**
**daß** der Stoßdämpfer (13, 13A, 13B, 13D) eine etwa U-förmige Vorrichtung ist, deren beide einander gegenüberliegenden Enden mit dem Anker (9) in Berührung treten.

5. Vorrichtung nach einem der Ansprüche 1 bis 4,
**dadurch gekennzeichnet,**
**daß** Fett auf die Stoßflächen des Ankers (9) und des Stoßdämpfers (13, 13A, 13B, 13D) aufgebracht ist.

6. Vorrichtung nach einem der Ansprüche 1 bis 5,
**dadurch gekennzeichnet,**
**daß** der Stoßdämpfer (13) ein Paar Dämpfungseinrichtungen (13a) aufweist, die durch einen Verbindungsbereich (13b) verbunden sind, der in Haken (13c) endet, die in Schnappeingriff mit dem Anker (9) stehen.

7. Vorrichtung nach einem der Ansprüche 1 bis 5,
**dadurch gekennzeichnet,**
**daß** der Stoßdämpfer (13A) ein Paar einzelner Stoßdämpfer (13A) aufweist, die mit ihren Dämpfungseinrichtungen (13a) an gegenüberliegenden Seiten des Ankers (9) angebracht sind und die mit ihren an den jeweiligen Enden vorgesehenen Haken (13c) in Schnappeingriff mit dem Anker (9) stehen.

8. Vorrichtung nach einem der Ansprüche 1 bis 5,
**dadurch gekennzeichnet,**
**daß** es sich bei dem Stoßdämpfer (13B) um eine gefaltete Plattenfeder handelt, die an dem Anker (9) fest angebracht ist und gefaltete Enden aufweist, die elastische Dämpfungseinrichtungen (13a) bilden, die zwischen dem Anker (9) und den Bremsbacken (1, 3) vorgesehen sind.

9. Vorrichtung nach einem der Ansprüche 1 bis 5,
**dadurch gekennzeichnet,**
**daß** es sich bei dem Stoßdämpfer (13D) um eine gefaltete Plattenfeder handelt, die an dem Anker (9) fest angebracht ist und Enden aufweist, die sich in einem stumpfen, etwa rechten Winkel von ihrem Hauptteil weg erstrecken, um an dem Anker (9) vorgesehene Dämpfungseinrichtungen (13a) zu bilden.

## Revendications

1. Dispositif formant frein à tambour, comprenant :
-- une plaque dorsale (1),
-- deux mâchoires de freinage (2, 3) placées en face l'une de l'autre sur le dessus de la plaque dorsale (1),
-- un actionneur de frein de service (8) adapté à être activé par un frein de service monté sur la plaque dorsale (1) entre une paire de premières extrémités adjacentes (2a, 3a) des mâchoires de freinage (2, 3),
-- un ancrage (9) monté sur la plaque dorsale (1) entre l'autre paire de secondes extrémités adjacentes (2b, 3b) des mâchoires de freinage (2, 3), l'ancrage (9) ayant un tronçon de contact, les secondes extrémités adjacentes (2b, 3b) des mâchoires de freinage (2, 3) étant en engagement avec celui-ci,
-- un dispositif de réglage de jeu de mâchoires (15) prévu en position adjacente à l'actionneur de frein de service (8) et agencé entre les mâchoires de freinage (2, 3),
-- un actionneur de frein de stationnement (19) adapté à être activé par un frein de stationnement prévu en position adjacente à l'ancrage (9), et
-- un levier pivotant (14) monté pivotant et capable de tourner au niveau de la région centrale de la mâchoire de freinage (2), le premier côté et le second côté dudit levier engageant respectivement et fonctionnellement le dispositif de réglage de jeu de mâchoires (15) et l'actionneur de frein de stationnement (19),
-- un organe d'amortissement de choc (13, 13A, 13B, 13D) comprenant un élément amortisseur (13a) qui est placé entre l'ancrage (9) et les autres extrémités (2b, 3b) des mâchoires de freinage (2, 3) qui font face à l'ancrage (9),
**caractérisé en ce que** l'organe d'amortissement de choc (13, 13A, 13B, 13D) est un ressort en plaque monté sur l'ancrage (9) et laissant un léger jeu entre le tronçon de contact de l'ancrage (9) et la surface latérale de l'élément amortisseur (13a) lorsqu'aucune force externe est appliquée sur l'organe d'amortissement de choc (13, 13A, 13B, 13D).

2. Dispositif selon la revendication 1,
**caractérisé en ce que** l'ancrage (9) supportant les autres extrémités (2b, 3b) des mâchoires de freinage (2, 3) est une plaque rectangulaire.

3. Dispositif selon l'une ou l'autre des revendications 1 et 2,
**caractérisé en ce que** l'organe d'amortissement de choc (13, 13A) est monté de façon détachable sur l'ancrage (9).

4. Dispositif selon l'une quelconque des revendications 1 à 3,
**caractérisé en ce que** l'organe d'amortissement de choc (13, 13A, 13B, 13D) est un dispositif approximativement en forme de U, dont les deux extrémités qui se font face sont en engagement avec l'ancrage (9).

5. Dispositif selon l'une quelconque des revendications 1 à 4,
**caractérisé en ce que** de la graisse est appliquée sur les surfaces d'impact de l'ancrage (9) et de l'organe d'amortissement de choc (13, 13A, 13B, 13D).

6. Dispositif selon l'une quelconque des revendications 1 à 5,
**caractérisé en ce que** l'organe amortisseur de choc (13) comprend une paire d'éléments d'amortissement (13a) connectés par une partie de connexion (13b) qui se termine par des crochets (13c) qui sont en engagement par encliquetage avec l'ancrage (9).

7. Dispositif selon l'une quelconque des revendications 1 à 5,
**caractérisé en ce que** l'organe amortisseur de choc (13A) comprend une paire d'organes amortisseurs de choc uniques (13A) qui sont montés avec leurs éléments amortisseurs (13a) sur des côtés opposés de l'ancrage (9) et qui sont en engagement par encliquetage avec l'ancrage (9) au moyen de leurs crochets (13c) prévus aux extrémités respectives.

8. Dispositif selon l'une quelconque des revendications 1 à 5,
**caractérisé en ce que** l'organe amortisseur de choc (13B) est un ressort en plaque repliée, lequel est monté de manière fixe sur l'ancrage (9) et comprend des extrémités repliées qui forment des éléments amortisseurs élastiques (13a) prévus entre l'ancrage (9) et les mâchoires de freinage (2, 3).

9. Dispositif selon l'une quelconque des revendications 1 à 5,
**caractérisé en ce que** l'organe amortisseur de choc (13D) est un ressort en plaque repliée, lequel est monté de manière fixe sur l'ancrage (9) et comprend des extrémités s'étendant sous un angle obtus, approximativement droit, depuis la partie principale du ressort, pour former des éléments amortisseurs (13a) prévus au niveau de l'ancrage (9).
